Europäisches Patentamt

European Patent Office

Office européen des brevets

(11) Publication number: **0 230 367 B1**

(12) **EUROPEAN PATENT SPECIFICATION**

(45) Date of publication of patent specification: **18.07.90**

(51) Int. Cl.⁵: **G 01 L 11/00**

(21) Application number: **87300257.0**

(22) Date of filing: **13.01.87**

(54) Apparatus for judging inner pressure of filled can.

(30) Priority: **13.01.86 JP 4650/86**

(43) Date of publication of application:
**29.07.87 Bulletin 87/31**

(45) Publication of the grant of the patent:
**18.07.90 Bulletin 90/29**

(84) Designated Contracting States:
**DE FR GB IT**

(56) References cited:
**DE-A-2 927 441**

**PATENT ABSTRACTS OF JAPAN vol. 6, no 46
(P-107)(924), 24th March 1982 & JP - A - 56 163
431**

**PATENT ABSTRACTS OF JAPAN vol. 9, no. 9
(P-327)(1732), 16th January 1985 & JP - A - 59
157 537**

(73) Proprietor: **DAIWA CAN COMPANY, LIMITED
No. 1-10, Nihonbashi 2-chome
Chuo-ku Tokyo 103 (JP)**

(72) Inventor: **Masuda, Masayuki
No. 17-1, Nihommatsu 2-chome
Sagamihara-shi Kanagawa 229 (JP)**
Inventor: **Umeyama, Tamotsu
No. 1-11, Yokohama 6-chome
Sagamihara-shi Kanagawa 229 (JP)**

(74) Representative: **Charlton, Peter John et al
ELKINGTON AND FIFE Beacon House 113
Kingsway
London WC2B 6PP (GB)**

## Description

This invention relates to a device for measuring the inner or internal pressure in filled cans and, more particularly, to an apparatus for checking whether the filled can inner pressure is satisfactory by measuring the reaction force provided by the filled can when the can barrel is pressed in the direction of the diameter thereof.

A prior art apparatus for determining the filled can inner pressure by measuring the reaction force provided by the can barrel (can body) comprises a back-up unit and a measuring unit. The distance between a back-up roll of the back-up unit and a measuring roll of the measuring unit is set to a value which is very slightly smaller than the average value of the barrel of filled cans to be measured. The amount of displacement of the measuring roll engaging with a predetermined press strength to the barrel of a filled can when the can barrel passes through this gap is measured by a load cell to judge whether the inner pressure is satisfactory. The sectional profile of the can barrel, however, is not really circular, but there is an error of about 0.7 mm at the most between the maximum and minimum diameters. Therefore, with the afore-mentioned distance between the back-up and measuring rolls, some cans may pass through the gap between the two rolls without almost being urged by these rollers. Thus, it is impossible to effect appropriate judgement as to whether the can inner pressure is satisfactory.

An apparatus having an aim of solving the above problem is disclosed in Japanese Patent Laid-Open Publication No. 157537/84. The disclosed apparatus comprises, as shown in Fig. 5, a back-up unit $A$, having a cylindrical and rotatable back-up roll 1; and a measuring unit $B$ having a measuring roll 3 having a crown-like outer periphery 2 and rotatably supported by a support rod 4 which is mounted in a bearing 5 such that the measuring roll 3 can be advanced and retreated with respect to the back-up roll 1, and a load cell 6 being operated by the moving of the roll 3 or the rod 4; and a conveyor unit having rope belts 7a to 7d, the belts 7a and 7b being adapted to be in contact with both sides of an upper portion of the barrel of a filled can C1, and the belts 7c and 7d in contact with a lower portion of the can barrel, to guide the can $C$ such that the can barrel C1 proceeds through the gap between the rolls 1 and 3. Reference numeral 8 is a filled can support member for supporting the bottom of proceeding filled cans.

In the apparatus disclosed in Fig. 5, the can body is guided in a state sandwiched between the four rope belts to proceed without rotation, and two sets of a back-up unit and a measuring unit are provided to hold said can between them. Each measuring roll thrusts the same portion of the body of a proceeding filled can with a different amount of thrust to the other. Then each reaction force of the can barrel is measured by each load cell. Finally, whether the internal pressure is satisfactory is judged by comparing the difference between the two measured values with the standard value.

The apparatus for judging the filled can inner pressure disclosed in the publication noted above, however, has two sets of back-up and measuring units for low inner pressure filled cans and a unit for measuring the extent of deformation of the end or lid of high inner pressure filled cans. Therefore, the apparatus is complicated and expensive. Further, the measurement is done twice with respect to the same portion of the body of the filled can, and the two measurement values are processed. Further, separate methods of measurements have to be used for low inner pressure filled cans and high inner pressure filled cans. Thus the treatment becomes complicated.

This invention according to claim 1 has been made in order to solve the above problems.

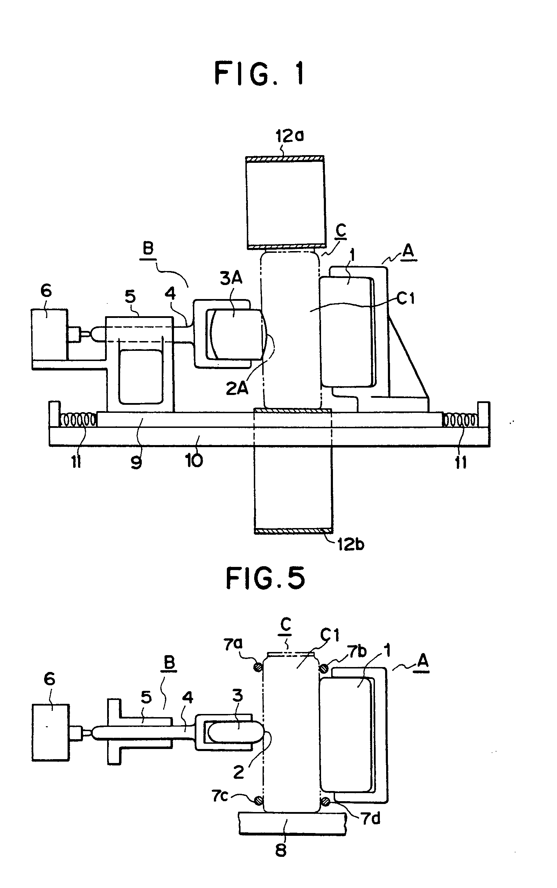

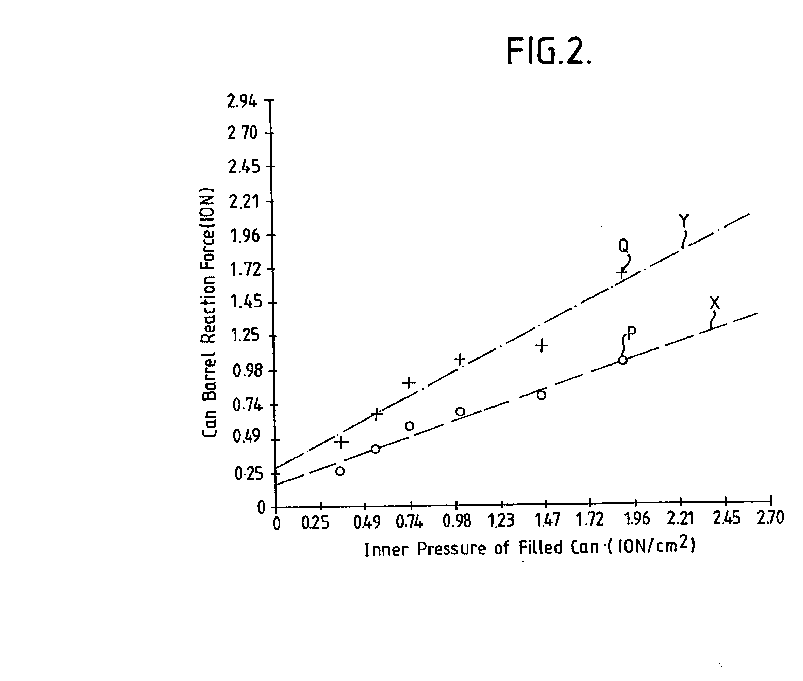

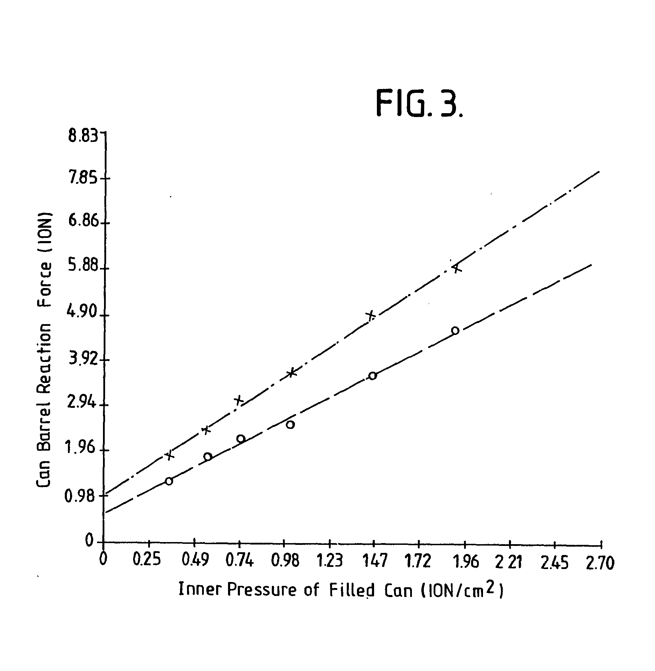

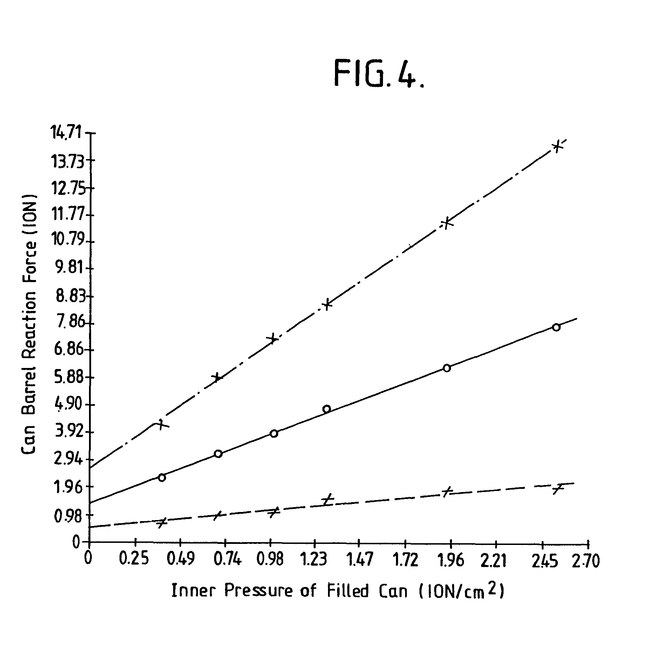

Fig. 1 is a schematic front view showing an apparatus for judging the inner pressure of a filled can according to the invention; Fig. 2 is a graph showing the relation between the can barrel reaction force and can inner pressure when the distance between two rolls is set to be smaller by 1 mm than the average can barrel diameter and the radius of arcular sectional profile of roll is 50 and 136 mm; Fig. 3 is a graph showing the relation between the can barrel reaction force and can inner pressure when the distance between the rolls is smaller by 2 m than the average can barrel diameter and the radius of the arcular sectional profile of roll is 50 and 136 mm; Fig. 4 is a graph showing the relation between the can barrel reaction force and can inner pressure when a roll with an arcuate sectional profile of a radius of 136 mm is used and the distance between the rolls is set to be smaller by 1, 2 and 3 mm respectively than the average can barrel diameter; and Fig. 5 is a schematic front view showing a prior art filled can inner pressure judgement apparatus.

## Operation

In the method of judging the filled can inner pressure according to the invention, the distance between the back-up and measuring rolls is smaller by 2 mm or more than the average diameter of the central portion of the can barrel. Thus, the ratio of the reaction force of the can barrel and can inner pressure becomes constant when the can barrel passes through the gap between the two rolls. It is thus possible to judge whether the filled can is satisfactory with the desired can inner pressure as the limit pressure.

The above can be known from the following derived from Figs. 2, 3 and 4.

Fig. 2 shows the relation between the reaction force of the can barrel and can inner pressure when the distance between two rolls is set to be smaller by 1 mm than average can barrel diameter and a filled can with a diameter of approximately 66 mm and the height of 122 mm is passed between the two rollers. Shown at P (i.e., circles $\bigcirc$) are values when a roll with a crown-like outer periphery having an arcuate sectional profile with a radius of 50 mm is used. Shown at Q (i.e., crosses $\times$) are values when a roll with an arcuate profile of 136 mm is used. Many of these values are deviated from the dashed plot X and dot-and- bar plot Y. This shows that, with the distance between the rollers noted above, the ratio between the can inner pressure and can barrel reaction force is not constant. But when the distance between the rollers is set to be smaller by 2 mm than the average can barrel diameter, as shown in Fig. 3, the ratio between the can inner pressure and can barrel reaction force is substantially constant in the case of the valued marked by the circles (○) and values marked by the crosses (×).

Fig. 4 shows the relation between the can barrel reaction force and can inner pressure when a roll with a crown-like outer periphery having an arcuate sectional profile with a radius of 136 mm with the distance between the rolls set to be smaller by 1 mm (cross marks *), smaller by 2 mm (circular marks ○) and smaller by 3 mm (crosses ×). When the distance between the rolls is smaller by 1 mm as shown by cross marks (*), the difference in the can barrel reaction force is small compared with the difference in the can inner pressure. Thus it becomes more difficult to judge the inner pressure.

In the method of judging the inner pressure in a filled can according to the invention, the can body is pressed by a roll having a crown-like outer periphery with an arcuate section profile with a radius of 60 mm or more on a plane containing the roll axis. Thus, no damage in the circumferential direction is caused when the can barrel is pressed.

This can be known from Table 1 "Roll shape, extent of thrusting and damage state". The table shows the result of damage to the can barrel when the inner pressure of a filled can with a diameter of about 66 mm and a height of about 122 mm is measured using rolls having a length of 40 mm and having crown-like sectional profiles having arcuate sectional profiles with radii of 50, 60 and 136 mm in a plane containing the roll axis.

TABLE 1

Roll shape, extent of thrusting and damage state

| Radius of arcuate sectional profile of roll (mm) | Extent of thrusting (mm) | Can inner pressure (10N/cm$^2$) | | | | | |
|---|---|---|---|---|---|---|---|
| | | 0.35 | 0.56 | 0.74 | 1.02 | 1.46 | 1.91 |
| 50 | 1 | ◎ | ◎ | ◎ | ◎ | ◎ | ◎ |
| | 2 | ◎ | ○ | ◎ | ○ | × | × |
| | 3 | ×× | ×× | ×× | ×× | ×× | ×× |
| 60 | 2 | ◎ | ◎ | ◎ | ◎ | ◎ | ◎ |
| 136 | 1 | ◎ | ◎ | ◎ | ◎ | ◎ | ◎ |
| | 2 | ◎ | ◎ | ◎ | ◎ | ◎ | ◎ |
| | 3 | ○ | ○ | ○ | ○ | ○ | ○ |

◎ — No damage
○ — Very slight damage } Passed
× — Light damage
×× — Damage } Rejected

In case when a roll having an arcuate sectional profile with a radius of 50 mm was used, some can barrels were damaged very slightly so that they could not be judged to be satisfactory when the distance between the two rolls was smaller by 2 mm, which is one of the conditions according to the invention. On the other hand, when a roll having an arcuate sectional profile with a radius of 60 mm was used, no damaged can barrel was produced when the distance between the two rollers was smaller by 2 mm. When a roll having an arcuate sectional profile with a radius of 136 mm was used, very slight damage was caused so that the product is satisfactory even when the distance between the two rollers was smaller by 3 mm. Both of the corners of the arcuate section of the roller and the corner of the end of the roller have a radius of 1 mm.

As has been described in the foregoing, with the method according to the invention, the can inner pressure, in both cans the internal pressure of which is low and ones that of which is high, may be easily known by merely multiplying the can barrel reaction force by a proportionality constant. Further, since the proportionality constant is high, it is possible to obtain reliable judgement.

EP 0 230 367 B1

### Example

Now, the invention will be described in conjunction with an embodiment thereof shown in Fig. 1.

Fig. 1 is a schematic front view showing an apparatus for judging filled can inner pressure according to the invention. Referring to the Figure, parts *A, B, C,* 1, 4, 5, 6 and 7 designate the same parts as shown by *A, B, C,* 1, 4, 5, 6 and 7 shown in Fig. 5. Designated at 3A is a measuring roll consisting of a hard material, 2A the outer periphery of the measuring roll having an arcuate sectional profile and a radius of 60 mm or more, 9 a plate-like slide block, to which the back-up and measuring units *A* and *B* are connected integrally, 10 a base supporting the slide block 9 such that the block can be moved back and forth in a direction at right angles to the direction of progress of the can via springs 11, and 12a and 12b flat belts of conveyor adapted to be in forced contact with the opposite ends of the filled can in the axial direction thereof.

In this example, the back-up roll 1 was also made of a hard material, and the position of the measuring roll 3A was determined such that the distance between the back-up and measuring rolls 1 and 3A is set to be smaller by 2 mm than the average diameter of the center of the barrel of filled cans. As the measuring roll 3A was used one which had an arcuate i.e., crown-like outer periphery 2A with a radius of 136 mm and a length of 40 mm. Cans to be measured (with a diameter of about 66 mm and a height of approximately 122 mm) were almost successively supplied in between the upper and lower flat belts 12a and 12b. Each filled can was guided by the flat belts 12a and 12b to proceed toward the gap between the back-up and measuring rollers 1 and 3A. Almost all of the filled cans first came to be in contact with one of the rolls 1 and 3A. As a result, the back-up and measuring units *A* and *B* and slide block 9, these parts being integral with one another, are displaced against the spring forces of the spring 11. The filled can thus was fed through between and in contact with the rolls. The reaction force was measured and recorded by the load cell.

When the reaction force measured in the above way was less than 24.5 N, the filled can was rejected. The inner pressures of filled cans which showed reaction forces of 24.5 to 29.4 N were actually measured. Among the cans, there was no filled can the internal pressure of which was less than 4.9 N/cm$^2$ (4.9.10$^4$ Pa), thus showing that the judgement of the inner pressure was done accurately.

By the method of judging the filled can inner pressure according to the invention, the distance between the back-up and measuring rollers is set to be smaller by 2 mm or above than the average filled can barrel diameter. Therefore, it is possible to display the reaction force of the can barrel even if there are fluctuations of about 0.7 mm in the barrel diameter. And, since the displayed reaction force is linearly proportional to the filled can inner pressure, it is possible to judge the filled can inner pressure by merely passing the filled can between a back-up roll and a measuring roll. The judging process thus can be simply performed.

Further, since the roll outer periphery has a crown-like sectional profile with a radius of 60 mm or above in a plane containing the roll axis, no damage is caused to the can barrel even if the distance between the two rolls is as above.

Since the filled can inner pressure judgement apparatus according to the invention comprises only a single set of back-up and measuring units, the construction is simple. Further, since the filled can is transferred by the upper and lower flat belts, the back-up and measuring rolls may be constructed to have sufficient lengths. It is thus possible to prevent damage to the can barrel. Further, since the back-up and measuring units and slide block are made integral and mounted to be movable in directions perpendicular to the direction of progress of the filled can via springs, even when the body of a filled can being fed by the flat belts strikes either the back-up or measuring roll first, the back-up and measuring units and slide block can move according to the movement of the can without causing damage to the can body, and the reaction force thereof can be measured accurately.

### Claims

1. An apparatus for determining whether or not the inner pressure of a filled can (C1) moving in a conveyed direction is satisfactory, said apparatus comprising:

a back-up unit (A) and a measuring unit (B) between which the filled can moves in the conveyed direction,

said back-up unit including a hard back-up roll (1) rotatably mounted in the apparatus about a fixed axis of rotation for rotatably engaging the barrel of the filled can moving between said back-up unit and said measuring unit,

said measuring unit including a measuring roll (3A) spaced from said back-up roll and rotatably mounted in the apparatus about an axis of rotation thereof that extends parallel to the fixed axis of rotation of said back-up roll, and a support rod means (4) to which said measuring roll is rotatably mounted for receiving a reaction force exerted by the can on said measuring roll when the outer diameter of the barrel of the can moved between said back-up unit and said measuring unit is greater than the distance at which said measuring roll is spaced from said back-up roll,

one of said back-up roll and said measuring roll having an outer periphery having an arcuate sectional profile (2A) that extends in a plane in which the axis of rotation of said one of said back-up roll and said measuring roll is disposed,

a conveyor for causing progress of the filled can such that the barrel of the can passes through

4

# EP 0 230 367 B1

between the two rolls, said conveyor consisting of flat belts (12a, b) held in forced contact with the opposite ends of the filled can in the axial direction thereof,

a load cell (6) operatively connected to said support rod means for sensing said reaction force received by the support rod means to determine whether or not the inner pressure of the filled can moving in the conveyed direction is satisfactory, and

a side block (9) to which said back-up roll, said load cell and said measuring roll are mounted, a base (10) on which said slide block is slidably supported, and resilient spring means (11) connected between said slide block and said base for biasing said slide block to a predetermined position on said base and for allowing said slide block to slide on said base from said position.

2. The apparatus according to claim 1, wherein the outer periphery of either said back-up or measuring roll is arcuate in sectional profile with a radius of 60 mm or above in a plane containing the roll axis, and said two rolls are disposed such that they are spaced apart by a distance smaller by 2 mm or more than the average diameter of the axially central portion of said can barrel.

## Patentansprüche

1. Ein Gerät zur Bestimmung, ob der innere Druck einer gefüllten Dose (C1), die sich in einer Förderrichtung bewegt, zufriedenstellend ist, wobei das Gerät enthält:

eine Stützeinheit (A) und eine Meßeinheit (B) zwischen denen die gefüllte Dose sich in der Förderrichtung bewegt,

wobei die Stützeinheit eine harte Stützrolle (1) enthält, die in dem Gerät um eine feste Drehachse drehbar angebracht ist, um an dem Mantel der gefüllten Dose, die sich zwischen der Stützeinheit und der Meßeinheit bewegt, drehbar anzugreifen,

wobei die Meßeinheit eine Meßrolle (3A) enthält, die einen Abstand von der Stützrolle hat und in dem Gerät um eine Drehachse drehbar gelagert ist, die sich parallel zu der festen Drehachse der Stützrolle erstreckt, mit einem Tragstangenmittel (4), an dem die Meßrolle drehbar angebracht ist, um eine durch die Dose auf die Meßrolle ausgeübte Reaktionskraft aufzunehmen, wenn der äußere Umfang des Mantels der Dose zwischen der Stützeinheit und der Meßeinheit größer ist als der Abstand, um den die Meßrolle von der Stützrolle beanstandet ist,

wobei eine der Stütz- und Meßrollen einen äußeren Umfang hat, der ein bogenförmiges Querschnittsprofil (2A) hat, das sich in einer Ebene erstreckt, in der die Drehachse dieser einen der Stütz- und Meßrollen angeordnet ist,

einen Förderer zum Bewirken eines Fortschreitens der gefüllten Dosen so, daß der Mantel der Dose zwischen den beiden Rollen hindurchläuft, wobei der Förderer aus flachen Bändern (12a, b) besteht, die in Kraft-Kontakt mit den einander entgegengesetzten Enden der gefüllten Dose in deren axialer Richtung gehalten sind,

eine Meßzelle (6), die wirkungsmäßig mit den Tragstangenmitteln verbunden ist, um die Reaktionskraft zu messen, die von den Tragstangenmitteln aufgenommen wird, um zu bestimmen, ob der Innendruck der gefüllten Dose, die sich in der Förderrichtung bewegt, zufriedenstellend ist oder nicht, und

einen Gleitblock (9), an dem die Stützrolle, die Meßzelle und die Meßrolle montiert sind, eine Basis (10), die den Gleitblock gleitend trägt und elastische Federmittel (11), die zwischen den Gleitblock und die Basis geschaltet sind, um den Gleitblock in eine vorbestimmte Position auf der Basis zu belasten und es dem Gleitblock zu ermöglichen, auf der Basis aus dieser Position zu gleiten.

2. Der Gerät nach Anspruch 1, bei dem der äußere Umfang entweder der Stütz- oder Meßrolle im Querschnittsprofil gekrümmt ist mit einem Radius von 60 mm oder mehr in einer Ebene, die die Achse der Rolle enthält, und wobei die bei den Rollen so angeordnet sind, daß sie um eine Distanz voneinander entfernt sind, die um 2 mm oder mehr kleiner ist als der durchschnittliche Durchmesser des axialen Mittelabschnitts des Dosenmantels.

## Revendications

1. Un appareil pour déterminer si la pression intérieure d'une boîte remplie (1) se déplaçant dans une direction de transport est ou non satisfaisante, ledit appareil comprenant:

une unité d'appui (A) et une unité de mesure (B) entre lesquelles la boîte remplie se déplace dans la direction de transport,

ladite unité d'appui comprenant un rouleau d'appui dur (1) monté à rotation dans l'appareil autour d'un axe fixe de rotation pour venir au contact de façon rotative avec le tambour de la boîte remplie se déplaçant entre ladite unité d'appui et ladite unité de mesure,

ladite unité de mesure comprenant un rouleau de mesure (3A) espacé dudit rouleau d'appui et monté à rotation dans l'appareil autour d'un axe de rotation de ce dernier qui s'étend parallèlement à l'axe fixe de rotation dudit rouleau d'appui, et un moyen de tige de support (4) sur lequel ledit rouleau de mesure est monté à rotation pour recevoir une force de réaction exercée par la boîte sur ledit rouleau de mesure lorsque le diamètre extérieur du tambour de la boîte déplacée entre ladite unité d'appui et ladite unité de mesure est supérieur à la distance dont ledit rouleau de mesure est espacé dudit rouleau d'appui,

l'un desdits rouleaux d'appui ou de mesure possédant une périphérie extérieure présentant un profil en coupe en arc (2A) qui s'étend dans un plan dans lequel est disposé l'axe de rotation dudit rouleau: soit le rouleau d'appui soit le rouleau de mesure,

un convoyeur pour provoquer l'avancée de la boîte remplie de telle façon que le tambour de la boîte traverse entre les deux rouleaux, ledit convoyeur consistant en des bandes plates (12a, b) maintenues en contact forcé avec les extrémités opposées de la boîte remplie dans la direction axiale de celle-ci,

une cellule dynamométrique (6) reliée en fonctionnement auxdits moyens de tige de support pour détecter ladite force de réaction reçue par le moyen de tige de support pour déterminer si la pression intérieure de la boîte remplie se déplaçant dans la direction de transport est ou non satisfaisante, et

un bloc coulissant (9) sur lequel sont montés ledit rouleau d'appui, ladite cellule dynamométrique et ledit rouleau de mesure, une base (10) sur laquelle est supporté à coulissement ledit bloc coulissant, et des moyens élastiques formant ressort (11) reliés entre ledit bloc coulissant et ladite base pour solliciter ledit bloc coulissant vers une position déterminée au préalable sur ladite base et pour permettre audit bloc coulissant de coulisser sur ladite base à partir de ladite position.

2. L'appareil selon la revendication 1, dans lequel la périphérie extérieure soit du rouleau d'appui soit du rouleau de mesure présente un arc en profil en coupe d'un rayon de 60 mm ou supérieur dans un plan contenant l'axe du rouleau, et lesdits deux rouleaux sont disposés de telle façon qu'ils sont espacés l'un de l'autre d'une distance inférieure de 2 mm ou plus au diamètre moyen de la partie axialement centrale dudit tambour.

# FIG. 1

# FIG.5

FIG.2.

Can Barrel Reaction Force(10N)

Inner Pressure of Filled Can·(10N/cm²)

# FIG.3.

# FIG.4.

Can Barrel Reaction Force (10N) vs Inner Pressure of Filled Can (10N/cm$^2$)

EP 0 230 367 B1